# EUROPEAN PATENT APPLICATION

(11) **EP 4 793 475 A1**
(43) Date of publication of application: **19.08.2026**
(21) Application number: 26153215.4
(22) Date of filing: 21.01.2026
(51) Int. Cl.: F02B 37/00, F02B 37/007, F02B 37/16, F02B 75/22, F02F 7/00

(54) **V-TYPE INTERNAL COMBUSTION ENGINE**

(30) Priority: 18.02.2025 DE 102025106028
(71) Applicant: Liebherr-Components Colmar SAS, 68025 Colmar Cedex (FR)
(72) Inventor: BINDNER, Thierry, 67000 Strasbourg (FR); LEIB, Anthony, 68000 COLMAR (FR)
(74) Representative: Lorenz Seidler Gossel Part. mbB

(57) **Abstract**

The present invention provides a V-type internal combustion engine comprising a first cylinder bank and a second cylinder bank, each cylinder bank comprising a plurality of cylinders, a first turbocharger arrangement for providing charged air to the first cylinder bank and a second turbocharger arrangement for providing charged air to the second cylinder bank, and a charge air bridge connecting a charge air side of the first and second turbocharger arrangement. It is characterized in that an engine bypass control element, in particular an engine bypass flap, is provided on the charge air bridge.

## Description

The present application relates to a V-type internal combustion engine comprising a first cylinder bank and a second cylinder bank, each cylinder bank comprising a plurality of cylinders.

The V-type internal combustion engine comprises a first turbocharger arrangement for providing charged air to the first cylinder bank and a second turbocharger arrangement for providing charged air to the second cylinder bank.

Turbochargers are generally used to increase the efficiency of combustion engines. However, they require strategies to avoid turbo overboost and turbo overspeed, i.e. to avoid a charge air pressure that raises above a maximum allowable pressure and a rotational speed of the turbocharger raising above a maximum allowable rotational speed.

The following approaches are used to improve engine efficiency while avoiding turbo overboost/overspeed:
1. Using a bypass control element that will bypass the engine in the charge air duct such as a bypass valve / diverter valve (bypassing air from the compressor into the exhaust gas stream) and/or a blow off valve (releasing charge air in atmosphere) in order to ensure safety against over-speed.
2. Using a waste gate. Thanks to the waste gate, the exhaust gas can bypass the turbine and consequently, the charge air pressure and turbocharger speed can be adapted to the demand.

Drawbacks of the waste gate are:
a. Temperature of waste gate components: Exhaust temperature is definitively higher than charge air temperature. Consequently, components are more stressed with thermal expansion issues. This is finally causing more thermomechanical issue at the waste gate itself than a bypass control element at charge air temperature.
b. Soot in the exhaust gas: Soot contained in exhaust gas is slowly accumulating into the clearances between waste gate shaft and waste gate housing. This is finally slowly increasing the torque needed to open or close the waste gate until a malfunction of the actuator. It can go up to flap blocking.

Therefore, the use of a bypass control element that will bypass the engine in the charge air duct has several advantages over the use of a waste gate.

However, integrating bypass control elements in a V-type internal combustion engine comprising a first and a second turbocharger arrangement associated to a first cylinder bank and a second cylinder bank so far requires a complex and expensive construction, especially if the solution has to be adapted to several engine sizes and differently sized turbocharger arrangements.

Further, it is necessary to take into account requirements on engine response in transient operation and requirements regarding exhaust gas aftertreatment.

An object of the present invention is therefore to provide an improved V-type internal combustion engine comprising a first and a second turbocharger arrangement.

This object is solved by the V-type internal combustion engines a defined in the independent claims. Preferred embodiments are the subject matter of the dependent claims.

In a first independent aspect, the present invention comprises a V-type internal combustion engine comprising a first cylinder bank and a second cylinder bank, each cylinder bank comprising a plurality of cylinders, a first turbocharger arrangement for providing charged air to the first cylinder bank and a second turbocharger arrangement for providing charged air to the second cylinder bank, and a charge air bridge connecting a charge air side of the first and second turbocharger arrangement.

According to the first aspect of the present invention, an engine bypass control element is provided on the charge air bridge. In particular, the engine bypass control element may be configured as an engine bypass flap.

According to the first aspect, only a single engine bypass control element is necessary for controlling charge air bypass of the engine. Further, it is conveniently arranged in the charge air system. Thereby, a simplified construction is provided.

In an embodiment, the first turbocharger arrangement comprises at least one turbocharger and a first charge air cooler, and the second turbocharger arrangement comprises at least one turbocharger and a second charge air cooler, wherein the charge air bridge connects the first and second charge air cooler and/or charge air ducts upstream of the first and second charge air cooler.

In such a construction, the charge air bridge will usually have the same position on the engine regardless of the size of the engine or of the turbocharger arrangements, such that the same charge air bridge and/or engine bypass control element can be used for an entire engine family. Further, the engine bypass control element is conveniently located to be connected to the exhaust gas ducts of the engine.

In an embodiment, the charge air bridge is fluidly coupled to and/or arranged between the top covers of the first and second charge air coolers. These covers can be configured such that they can be used for an entire engine family, such that also the charge air bridge and/or the engine bypass control element can be used for an entire engine family. Further, the engine bypass control element is conveniently located to be connected to the exhaust gas ducts of the engine.

The engine bypass control element according to the first aspect may be configured as a blow-off control element that will release charge air to the atmosphere in order to bypass the engine.

In a preferred embodiment, however, an outlet side of the engine bypass control element is fluidly connected to an exhaust gas line downstream of the turbines of the turbocharger arrangements and upstream of an exhaust gas aftertreatment system.

Thereby, the engine bypass control element can also be used to control the temperature of the exhaust gases, because charge air is usually cooler than exhaust gases such that mixing charge air into the exhaust gases will reduce the temperature of the exhaust gas. This will help to maintain exhaust gas temperature in a range that is acceptable to an exhaust gas aftertreatment system and in particular to avoid over-temperature situations for the exhaust gas aftertreatment system.

In a second independent aspect, the present invention comprises a V-type internal combustion engine, comprising a first cylinder bank and a second cylinder bank, each cylinder bank comprising a plurality of cylinders, a first turbocharger arrangement for providing charged air to the first cylinder bank and a second turbocharger arrangement for providing charged air to the second cylinder bank, and an engine bypass control element. According to the second aspect, an outlet side of the engine bypass control element is fluidly connected to an exhaust gas connection line connecting exhaust gas ducts of all the turbochargers downstream of the respective turbines.

Because the exhaust gas connection line connects the exhaust gas ducts of all the turbochargers, the charge air is introduced into the exhaust gas system upstream of the exhaust gas aftertreatment system of the engine. The exhaust gas connection line therefore allows to cool the exhaust gazes by charge air, leading to a higher reliability of the exhaust gas aftertreatment system. Further, it will equalize exhaust gas pressure between the exhaust gas ducts of all the turbochargers and avoids the need for customers to create an extra customer interface for the collection of the charge air.

In an embodiment, the engine bypass control element is configured as an engine bypass flap.

In an embodiment, the exhaust gas connection line is connecting exhaust gas elbows of the turbochargers. In particular, the exhaust gas elbows are arranged on the outlet of the turbines of the turbochargers and comprise a curved section in order to guide the exhaust gas away from the outlets.

In an embodiment, the exhaust gas connection line comprises at least one connection section connecting an exhaust gas duct of a first turbocharger and an exhaust gas duct of a second turbocharger. Thereby, the exhaust gas connection line can be extended by providing additional connection sections if additional turbochargers are provided.

In an embodiment, the exhaust gas connection line comprises at least one connection section connecting an exhaust gas duct of a first turbocharger of the first turbocharger arrangement and an exhaust gas duct of a turbocharger of a second turbocharger of the second turbocharger arrangement. This is of particular advantage for an engine where the turbochargers of the first and second turbocharger arrangement are alternately arranged along an axial extension of the engine.

In an embodiment, the exhaust gas connection line comprises a plurality of connection sections arranged in series.

In an embodiment, at least one exhaust gas duct of a turbocharger comprises a first and a second connection port connecting the exhaust gas duct via a connection section of the connection line to an exhaust port of an exhaust gas duct of another turbocharger or the outlet of the engine bypass control element.

In an embodiment, the exhaust gas connection line comprises a plurality of connection sections connecting exhaust ports of exhaust ducts and being arranged in series.

The first and second aspect of the present invention are independent from each other. In a preferred embodiment, however, the first and second aspect of the present invention are provided in combination on an engine, i.e. the engine bypass control element is provided on the charge air bridge and an outlet side of the engine bypass control element is fluidly connected to an exhaust gas connection line connecting exhaust gas ducts of all the turbochargers downstream of the respective turbines

Embodiments applicable to the first aspect, the second aspect and to a combination of the first and the second aspect are described in the following:
In an embodiment, a first charge air cooler and a second charge air cooler are mounted adjacent to each other on a first axial side or on a second axial side of the engine.

In an embodiment, the engine comprises a flywheel housing on a first axial side and an aggregate support on a second axial side, wherein the first and second charge air coolers are mounted on the aggregate support side.

In an embodiment, the engine bypass control element comprises an actuator controlled by a controller of the engine.

In an embodiment, the engine comprises a controller configured for controlling the engine bypass control element, the controller being configured to control the engine bypass control element in dependence on turbocharger speed and/or exhaust gas temperature.

In an embodiment, the controller is further configured to open the engine bypass control element if the turbocharger speed and/or exhaust gas temperature raises above a threshold.

In an embodiment, the V-type internal combustion engine comprises at least 12 cylinders, and preferably 12, 16 or 20 cylinders.

In an embodiment, at least one turbocharger arrangement comprises at least two turbochargers.

In an embodiment, the first and the second turbocharger arrangements are arranged on top of the first and second cylinder bank, respectively.

In an embodiment, the turbochargers of the first and the second turbocharger arrangements are arranged such that the exhaust gas outlet sides of the turbines face towards the other cylinder bank.

In an embodiment, the turbochargers of the first and the second turbocharger arrangements are arranged such that the turbochargers of the first and the second turbocharger arrangements alternate along an axial direction of the engine.

In an embodiment, an exhaust gas elbow of a turbochargers of one of the turbocharger arrangements is provided between exhaust gas elbows of turbochargers of the other turbocharger arrangement.

The present invention further comprises a set comprising a first and a second V-type internal combustion engine as described above.

In an embodiment, the first and second V-type internal combustion engines comprise a different number of cylinders and/or turbochargers. Even in such a configuration, the first and second V-type internal combustion engines preferably have identical parts.

In an embodiment, the first and second V-type internal combustion engine comprise a different number of cylinders and/or turbochargers but the same engine bypass control element and preferably the same charge air bridge and/or top covers of the charge air coolers.

In an embodiment, the first and second V-type internal combustion engine comprise a different number of turbochargers, wherein the exhaust gas connection line of the engine comprising more turbochargers comprises an exhaust gas connection line that has a first part that is identical to an exhaust gas connection line of the engine comprising less turbochargers and a second part comprising at least one additional connection section.

Thereby, the present invention can be easily adapted to an entire engine family.

The present invention further comprises a machine comprising the V-type internal combustion engine as described above.

In an embodiment, the machine is a movable machine and the engine is used for propulsion of the movable machine.

In an embodiment, the engine drives a generator and the machine is used as a generator for generating electricity.

The present invention further comprises a method for configuring and producing a V-type internal combustion engine as described above with a desired number of cylinders and/or turbochargers out of a plurality of available cylinder and/or turbocharger numbers.

In a first aspect, the method comprises: providing the same engine bypass control element and preferably the same charge air bridge and/or top covers of the charge air coolers independently of the desired number of cylinders and/or turbochargers, and manufacturing the engine with the desired number of cylinders and/or turbochargers and the engine bypass control element and preferably charge air bridge and/or top covers of the charge air coolers.

In a second aspect, the method comprises providing at least a part of the exhaust gas connection line independently of the desired number of turbochargers, and manufacturing the engine with the desired number of turbochargers and the at least part of the exhaust gas connection line, wherein in case that the desired number of turbochargers is larger than a minimum number of turbochargers, at least one additional connection section is provided.

The present invention will now be described with respect to embodiments and drawings.

The drawings show:
- Fig. 1: a schematic representation of a first embodiment of a V-type internal combustion engine of the present invention,
- Fig. 2: a perspective, partly cut view of a second embodiment of a V-type internal combustion engine of the present invention,
- Fig. 3: top views of three engines of an embodiment of a set of engines forming an engine family having a different number of turbochargers,
- Fig. 4: the top views of Fig. 3 with the charge air flow and exhaust flow indicated, and
- Fig. 5: a conceptual drawing showing an embodiment of a V-type internal combustion engine comprising an exhaust gas aftertreatment system.

The drawings show embodiments of a V-type internal combustion engine of the present invention where both the first and the second aspect of the present invention are embodied. However, the details of each of these aspects described with respect to the embodiments shown in the drawings can also be used in isolation from each other.

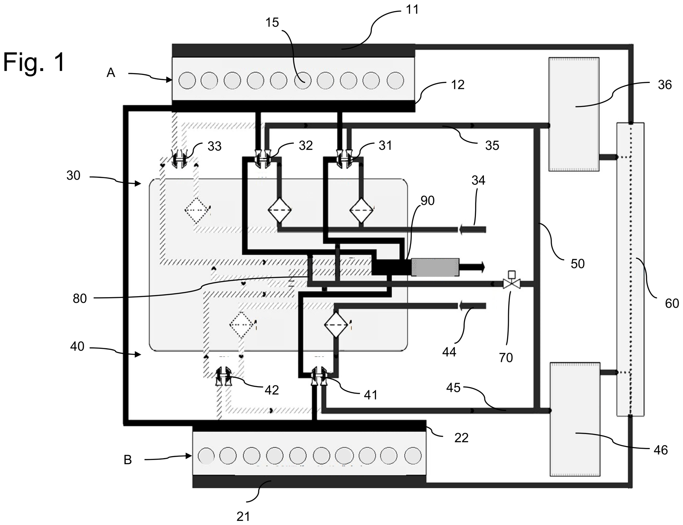

First of all, the general configuration of the V-type internal combustion engine of the present invention, as embodied in all the embodiments, as well as details of this configuration, is described in the following:
As shown in Fig. 1, the V-type internal combustion engine of the present invention comprises a first cylinder bank A and a second cylinder bank B. Each cylinder bank comprises a plurality of cylinders 15 arranged next to each other in an axial direction of the engine. For example, the number of cylinders per cylinder bank may be between six and ten cylinders, such that the engine has in total of 12 - 20 cylinders.

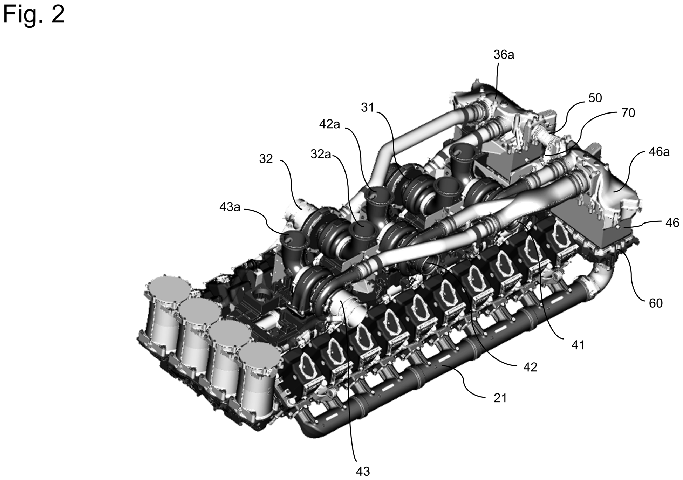

Intake air is provided to the cylinders of the cylinder banks A and B by intake air ducts 11 and 21, respectively. As shown in Fig. 2, in the embodiments, the intake air ducts 11 and 12 extend along the length of the respective cylinder bank and are connected to the intake manifold of the respective cylinders.

Further, exhaust gases from the cylinders are exhausted from the cylinders into exhaust gas ducts 12 and 22, respectively. As shown in Fig. 1, the exhaust ducts 12 and 22 may be connected by a bridge member.

Each of the cylinder banks comprises a turbocharger arrangement 30 and 40, respectively.

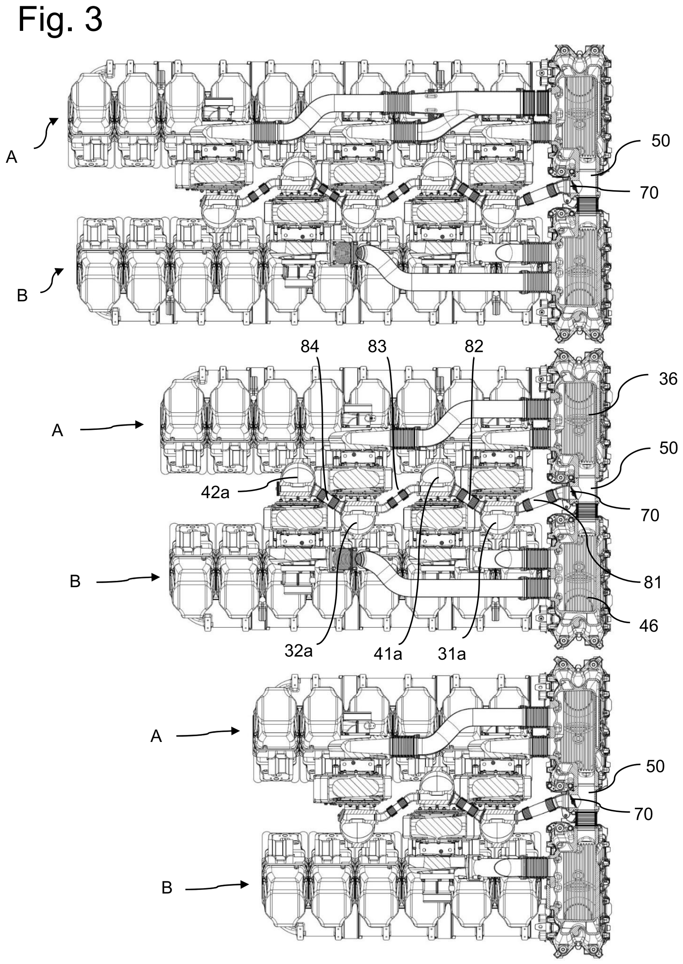

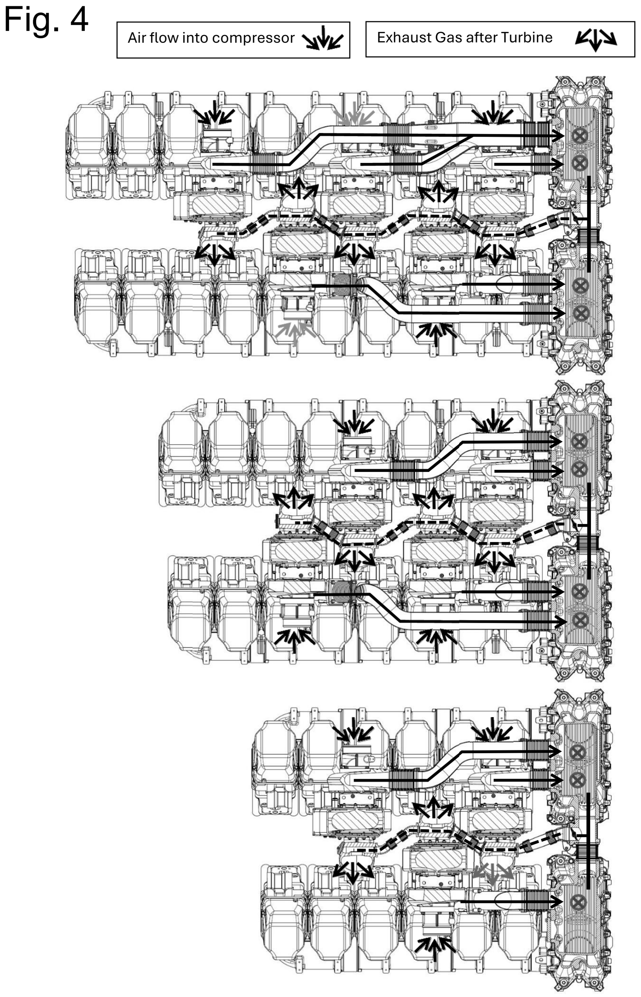

As shown in Fig. 1 as well as in Figures 3 and 4, each of the turbocharger arrangements 30 and 40 may comprise one or more turbochargers 31, 32, 33 and 41, 42, 43.

In the embodiment, exhaust gas from the exhaust gas duct 12 of the first cylinder bank A is guided to a turbine of the turbochargers 31 and 32 of the first turbocharger arrangement 30, and exhaust gas from the exhaust gas duct 22 of the second cylinder bank B is guided to the turbines of the turbochargers 41, 42, 43 of the second turbocharger arrangement 40.

In the turbochargers, the turbine drives a compressor that is used to compress intake air provided via air inlets 34, 44 respectively to provide charge air to the charge air ducts 35 and 45, respectively. The charge air ducts 35 and 45 of the first and second turbocharger arrangement are connected by a charge air bridge 50.

As can be seen in Figures 1 - 3, the charge air ducts 35 and 45 of the first and second turbocharger arrangement guide the charge air to charge air coolers 36 and 46, respectively, with an outlet of the charge air coolers providing charge air to the air inlet ducts 11 and 21 of the first and second cylinder banks A and B, respectively. Further, a downstream side of the charge air coolers 36 and 46 is interconnected via element 60.

As can be seen in particular from Fig. 2, the inlet air ducts 11 and 21 are arranged on an outer side of the respective cylinder banks A and B, while the turbocharger arrangements are arranged on an inner side of the cylinder banks on top of the engine in the space provided between the two cylinder banks.

Further, as can be seen from Figures 2 and 3, the turbochargers of the first and the second turbocharger arrangement alternate along an axial direction of the engine. Further, the exhaust outlet side of the turbochargers of the first turbocharger arrangement is opposite to the exhaust outlet side of the turbochargers of the second turbocharger arrangement, with the exhaust outlet side of the first turbocharger arrangement being directed towards the second cylinder bank, and vice versa.

The axis of the turbine and the compressor of the turbochargers extends in a horizontal direction and in a plane that is perpendicular to the axial direction of the engine.

On the exhaust gas outlet side of the turbines of the turbochargers, an exhaust gas elbow 31a, 32a, 33a, 41a, 42a, 43a is provided, which comprises a curved section that directs the exhaust gases upwards.

Further, as can be seen in Fig. 2, the charge air coolers 36 and 46 of the first and second turbocharger arrangement each have a top cover 36a and 46b, to which the charge air ducts 35 and 45 leading from the downstream side of the compressors of the turbochargers to the charge air coolers are connected.

Further, as can be seen in Fig. 2, in the embodiment depicted, the charge air bridge 50 is arranged between the top covers and connects the top covers of the charge air coolers, thereby providing a bridge between the charge air ducts upstream of the cooling part of the charge air coolers 46, 36.

The aspects of the present invention will be described in the following in the context of the embodiments:
As shown in Fig. 1, according to a first aspect, an engine bypass control element 70 is provided on the charge air bridge 50. The engine bypass control element will lead charge air to bypass the engine.

In the embodiment, when the engine bypass control element is open, charge air will flow from the charge air bridge 50 towards exhaust gas ducts provided downstream of the turbines of the turbocharger arrangements.

For this purpose, according to a second aspect, a connection line 80 is provided that connects an outlet side of the engine bypass control element with the exhaust gas ducts of all the turbochargers downstream of the respective turbines. It is to be noted that this connection line 80 is not depicted in Fig. 2, but in Fig. 3 and 4.

In the embodiment as shown in Fig. 3, the connection line interconnects the exhaust gas elbows 31a, 32a, 41a and 42a.

In particular, the connection line is comprised of connection sections 81 - 84, with a first connection section 81 arranged between the engine bypass control element and a first exhaust duct 31a of the turbocharger arranged on the axial side of the engine closest to the engine bypass control element. Further connection sections 82, 83 and 84 then in turn interconnect adjacent exhaust gas ducts 31a and 41a, 41a and 32a and 42a of adjacent turbochargers in series.

For this purpose, the exhaust gas ducts and in particular the exhaust gas elbows comprise ports to which the connection sections are connected. The connection sections are also referred to as inter-elbow compensators because they will compensate pressure differences between the exhaust gas ducts of the turbines of the turbochargers.

Because of the arrangement of the turbochargers described above, the exhaust gas ducts of the turbines and in particular the exhaust gas elbows are arranged between the two cylinder banks in a central region of the engine extending axially between the two cylinder banks, such that they can be easily interconnected by the connection sections. Further, they can be easily connected to the engine bypass control element 70 arranged between the charge air coolers 36 and 46.

As can be seen from Figures 3 and 4, the configuration of the present invention can be applied to different sizes of the engine, and different sizes of the turbocharger arrangements. In the top drawing of Figures 3 and 4, a twenty-cylinder engine with a total of five turbochargers is shown. In the middle drawing, a sixteen-cylinder engine with a total of four turbochargers is shown, and in the lower drawing, a twelve-cylinder engine with a total of three turbochargers is shown.

Different combinations of the numbers of turbochargers and the number of cylinders would be possible, as well.

As can be seen from the drawings, the same configuration of the engine bypass control element 70 and the connection line 80 can be used regardless of the size of the engine or the turbocharger arrangements. In particular, if additional turbochargers are provided, the configuration only has to be adapted in providing additional connection sections to the connection line to also connect the additional turbochargers to the series connection provided by the connection line. Otherwise, the same elements and the same configuration can used as for the smaller sized turbocharger arrangements.

As can be seen by the arrows in Fig. 4, intake air will flow into the respective inlets of the compressors, be compressed to charge air, and be guided by the charge air ducts 35 and 45 to the charge air coolers 36 and 46, respectively. The charge air ducts 35 and 45 are connected, in the embodiment via the charge air cooler covers, to the charge air bridge 50 and from the charge air bridge 50 via the engine bypass control element 70 and the connection line 80 to the exhaust elbows after turbine. As equally schematically shown, exhaust gases will flow out of the exhaust elbows upwards.

The exhaust elbows may be connected on a downstream by an exhaust gas container 90.

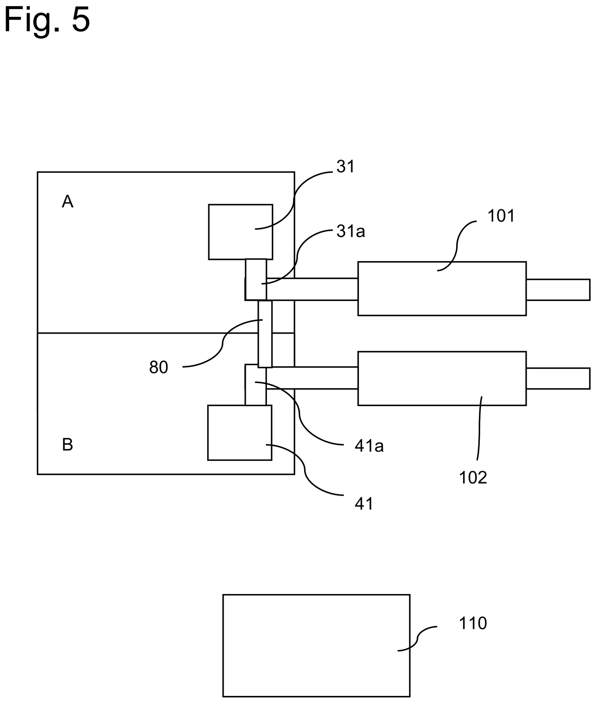

As further shown in Fig. 5, the engine may be provided with an exhaust gas aftertreatment system 101, 102 provided downstream of the exhaust gas ducts 31a, 41a of the turbines 41, 31 of the turbocharger arrangements. In particular, the aftertreatment system may comprise an SCR catalyst.

In the embodiment shown in Fig. 5, each exhaust gas duct of each turbocharger is connected to a separate exhaust gas aftertreatment system 101, 102, respectively. In such a configuration, the connection line 80 provides a pressure compensation between the respective exhaust ducts without requiring any additional interconnection upstream of the separate exhaust gas aftertreatment systems 101, 102.

Fig. 5 shows a configuration where each turbocharger arrangement only comprises a single turbocharger. The same concept can however also be applied to turbocharger arrangements comprising any other number of turbochargers. In particular, a separate exhaust gas aftertreatment system may be provided for each turbocharger of the turbocharger arrangements.

Fig. 5 also shows schematically an engine controller 110 that controls the engine bypass control element to open and to close. In particular, the engine bypass control element may be opened to avoid an overpressure or an overspeed of the turbocharger arrangement and/or in order to reduce the temperature of the exhaust gases provided to the aftertreatment system or systems.

The concepts of the present invention will further be described in the following. We note that these concepts can be applied to the engines shown in Figures 1 - 5, but do not rely on the details of these engines described above.

The engine architecture and/or the specific location of the engine bypass control element of the present invention make it possible to use only one unique engine bypass control element per engine in order to answer the needs of an entire engine family (such as from V12 to V20 equipped with 2,3,4 or 5 identical turbochargers). There is consequently no need to develop multiple engine bypass control elements depending on the engine power and size, and finally costs over the entire engine family are reduced.

The engine bypass control element is in particular an engine bypass flap. The following discussion will therefore specifically refer to an engine bypass flap, but all the features disclosed for an engine bypass flap are also applicable to an engine bypass control element in general.

The two main aspects of the present invention are described in the following:
The first aspect comprises positioning the engine bypass flap at a charge air line bridge linking bank A and bank B charge air tubing after compressor and fixing the engine bypass flap in the middle of two charge air coolers top covers. In the embodiment, the charge air coolers are fixed on engine front end. The charge air coolers top covers can stay unchanged through the entire engine family. Thereby, the position of the engine bypass flap does not have to be adapted either.

The flap, positioned at the charge air bridge, is fulfilling two functions:
a. With closed flap, charge air pressure is balanced between bank A and bank B. This function is especially needed with engines equipped with an uneven number of turbochargers (3 or 5).
b. With opened flap, charge air pressure is released and adapted quickly to the demand. The specific position of the flap at the bridge is allowing to have only one flap per engine (in opposition to a flap positioned on bank A and B which would result in an engine equipped with two flaps)

The second aspect comprises connecting the engine bypass flap outlet to all exhaust elbows after turbine (in opposition to a flap releasing the charge air in the atmosphere) thanks to inter-elbow compensators connecting the exhaust elbows.

This configuration has the following advantages:
a. It allows to cool the exhaust gazes by charge air. This will result in a higher SCR reliability.
b. It avoids the customer to create an extra customer interface for collection of the charge air (in case of container). Thereby, the quantity of interfaces are the same for certified or not certified engines at customer side.

Further advantages associated to both aspects of the present invention and in particular to providing the engine bypass control element are the following:
1. The engine bypass control element allows to introduce a smaller turbine wheel on the turbochargers and its associated capacity to accelerate quicker which is helping:
   a. To improve the engine behavior during transient load phases.
   b. To increase the performance in altitude (deaerating limits are defined at higher altitude)
   c. To create more charge air affecting the ratio air/fuel and finally optimizing emissions as required by Tier IV certification.
2. To have a safety feature on engine in case of turbo over-speed. In case of overspeed, the flap is controlled to open and unload the charge air loop which has for effect to reduce exhaust gas pressure and finally reduce turbo rotation speed.
3. Redirect the charge air gazes (max 250°C) to exhaust manifold after turbine which can be used as a way to reduce exhaust gas temperature and finally adapt it directly for an SCR in case of Tier IV engine, as the temperature range of the gases into SCR has to stay between 250°C and 540°C. In case of a exhaust gas temperature above a threshold, the flap is therefore controlled to open in order to reduce temperatures in the exhaust gas system.
4. In case of Tier IV engines equipped with SCR modules in the same quantity as turbochargers on engine, the invention is also avoiding the need for the customer to install an exhaust collector after engine as the flap is discharging the charge air into all elbows after turbochargers thanks to the inter-elbow compensators located between all exhaust elbows after turbine.
5. Reduced cost and increased reliability by using one unique flap on charge air loop at medium operating temperatures.

The present invention therefore allows to equip a complete diesel engine family (V12, V16 and V20) dedicated to Genset Tier IV applications and truck applications taking into account that these engines have to have quick respond time during transient load phases to answer customer needs and also have the capability to be certified following Tier IV regulations by using an exhaust gas aftertreatment system comprising an SCR.

## Claims

1. V-type internal combustion engine comprising
a first cylinder bank and a second cylinder bank, each cylinder bank comprising a plurality of cylinders,
a first turbocharger arrangement for providing charged air to the first cylinder bank and a second turbocharger arrangement for providing charged air to the second cylinder bank,
a charge air bridge connecting a charge air side of the first and second turbocharger arrangement,
**characterized in that**
an engine bypass control element, in particular an engine bypass flap, is provided on the charge air bridge.

2. The V-type internal combustion engine of claim 1, wherein the first turbocharger arrangement comprises at least one turbocharger and a first charge air cooler, and the second turbocharger arrangement comprises at least one turbocharger and a second charge air cooler, wherein the charge air bridge connects the first and second charge air cooler and/or charge air ducts upstream of the first and second charge air cooler, wherein preferably the charge air bridge is fluidly coupled to and/or arranged between the top covers of the first and second charge air coolers.

3. The V-type internal combustion engine of claim 1 or 2, wherein an outlet side of the engine bypass control element is fluidly connected to an exhaust gas line downstream of the turbines of the turbocharger arrangements and upstream of an exhaust gas aftertreatment system.

4. V-type internal combustion engine, in particular V-type internal combustion engine according to any one of the preceding claims, comprising
a first cylinder bank and a second cylinder bank, each cylinder bank comprising
a plurality of cylinders,
a first turbocharger arrangement for providing charged air to the first cylinder bank and a second turbocharger arrangement for providing charged air to the second cylinder bank,
an engine bypass control element, in particular an engine bypass flap,
**characterized in that**
an outlet side of the engine bypass control element is fluidly connected to an exhaust gas connection line connecting exhaust gas ducts of all the turbochargers downstream of the respective turbines.

5. The V-type internal combustion engine of claim 4, wherein exhaust gas connection line is connecting exhaust gas elbows of the turbochargers.

6. The V-type internal combustion engine of claim 4 or 5, wherein the exhaust gas connection line comprises at least one connection section connecting an exhaust gas duct of a first turbocharger and an exhaust gas duct of a second turbocharger, and in particular an exhaust gas duct of a first turbocharger of the first turbocharger arrangement and an exhaust gas duct of a turbocharger of a second turbocharger of the second turbocharger arrangement, wherein the exhaust gas connection line preferably comprises a plurality of connection sections arranged in series.

7. The V-type internal combustion engine of any one of claims 4 to 6, wherein at least one exhaust gas duct of a turbocharger comprises a first and a second connection port connecting the exhaust gas duct via a connection section of the connection line to an exhaust port of an exhaust gas duct of another turbocharger or the outlet of the engine bypass control element, wherein the exhaust gas connection line preferably comprises a plurality of connection sections connecting exhaust ports of exhaust ducts and being arranged in series.

8. The V-type internal combustion engine of any one of the preceding claims, wherein a first charge air cooler and a second charge air cooler are mounted adjacent to each other on a first axial side or on a second axial side of the engine, wherein preferably the engine comprises a flywheel housing on a first axial side and an aggregate support on a second axial side, wherein the first and second charge air coolers are mounted on the aggregate support side.

9. The V-type internal combustion engine of any one of the preceding claims, comprising a controller configured for controlling the engine bypass control element, the controller being configured to control the engine bypass control element in dependence on turbocharger speed and/or exhaust gas temperature, wherein the controller is further preferably configured to open the engine bypass control element if the turbocharger speed and/or exhaust gas temperature raises above a threshold.

10. The V-type internal combustion engine of any one of the preceding claims, comprising at least 12 cylinders, and preferably 12, 16 or 20 cylinders.

11. The V-type internal combustion engine of any one of the preceding claims, with at least one turbocharger arrangement comprising at least two turbochargers, and/or wherein the first and the second turbocharger arrangements are arranged on top of the first and second cylinder bank, respectively.

12. A set comprising a first and a second V-type internal combustion engine according to any one of the preceding claims, the first and second V-type internal combustion engine comprising a different number of cylinders and/or turbochargers but the same engine bypass control element and preferably the same charge air bridge and/or top covers of the charge air coolers.

13. A set comprising a first and a second V-type internal combustion engine according to any one of the preceding claims, the first and second V-type internal combustion engine comprising a different number of turbochargers, the exhaust gas connection line of the engine comprising more turbochargers comprising an exhaust gas connection line that has a first part that is identical to an exhaust gas connection line of the engine comprising less turbochargers and a second part comprising at least one additional connection section.

14. A machine comprising the V-type internal combustion engine according to any one of the preceding claims, wherein the machine is preferably a movable machine and the engine is used for propulsion of the movable machine or wherein the engine drives a generator.

15. A method for configuring and producing a V-type internal combustion engine according to any one of the preceding claims with a desired number of cylinders and/or turbochargers out of a plurality of available cylinder and/or turbocharger numbers, the method comprising:
providing the same engine bypass control element and preferably the same charge air bridge and/or top covers of the charge air coolers independently of the desired number of cylinders and/or turbochargers, and manufacturing the engine with the desired number of cylinders and/or turbochargers and the engine bypass control element and preferably charge air bridge and/or top covers of the charge air coolers,
and/or
providing at least a part of the exhaust gas connection line independently of the desired number of turbochargers, and manufacturing the engine with the desired number of turbochargers and the at least part of the exhaust gas connection line, wherein in case that the desired number of turbochargers is larger than a minimum number of turbochargers, at least one additional connection section is provided.
